# EUROPEAN PATENT APPLICATION

(11) **EP 4 462 915 A1**
(43) Date of publication of application: **13.11.2024**
(21) Application number: 23740059.3
(22) Date of filing: 12.01.2023
(51) Int. Cl.: H04W 72/04

(54) **DEVICE AND METHOD FOR BEAM FAILURE RECOVERY, AND MEDIUM**

(30) Priority: 14.01.2022 CN 202210039888
(71) Applicant: Sony Group Corporation, Tokyo 108-0075 (JP)
(72) Inventor: CAO, Jianfei, Beijing 100027 (CN)
(74) Representative: D Young & Co LLP
(86) International application number: PCT/CN2023/071853
(87) International publication number: WO 2023/134717

(57) **Abstract**

The present disclosure provides a device, method, and medium for beam failure recovery. An electronic device for beam failure recovery, comprises a processing circuitry configured to: determine a reference signal group for beam failure detection, and perform beam failure detection by using the reference signal group, wherein the reference signal group corresponds to a network device group, and wherein the electronic device communicates with the network device group in a single carrier frequency network mode; and in a case that a beam failure is detected, transmit a beam failure recovery request to the network device group, receive a beam failure recovery response from a network device in the network device group, the beam failure recovery response indicating at least one new beam, and communicate with at least one network device in the network device group by using the at least one new beam.

## Description

### TECHNICAL FIELD

The present disclosure relates to the field of wireless communications, and specifically to a device, method and medium for beam failure recovery in wireless communications.

### BACKGROUND

In the current New Radio (NR) system, the monitoring of downlink beam failures by a user equipment (UE) is to measure a control resource set (CORESET) where a physical downlink control channel (PDCCH) is located and to calculate the assumed block error rate (BLER). In 3GPP Rel.17, for high-speed mobile scenarios, a single carrier frequency network (SFN) transmission scheme is introduced, and a unified TCI state is newly defined. Therefore, there is a need to study a new beam failure recovery scheme.

### SUMMARY

According to an aspect of the present disclosure, there is provided an electronic device for beam failure recovery, including a processing circuitry configured to: determine a reference signal group for beam failure detection, and perform beam failure detection by using the reference signal group, wherein the reference signal group corresponds to a network device group, and wherein the electronic device communicates with the network device group in a single carrier frequency network mode; and in a case that a beam failure is detected, transmit a beam failure recovery request to the network device group, receive a beam failure recovery response from a network device in the network device group, the beam failure recovery response indicating at least one new beam, and communicate with at least one network device in the network device group by using the at least one new beam.

According to another aspect of the present disclosure, there is provided an electronic device for beam failure recovery, including a processing circuitry configured to: perform beam failure detection by using a configured reference signal, wherein the configured reference signal is updated according to a unified TCI state; and in a case that a beam failure is detected, transmit a beam failure recovery request to a network device, the beam failure recovery request indicating a new beam that the electronic device wishes to use, receive a beam failure recovery response from the network device, the beam failure recovery response indicating the new beam confirmed by the network device, and communicate with the network device by using the new beam confirmed by the network device.

According to yet another aspect of the present disclosure, there is provided a method for beam failure recovery performed by a user equipment, comprising: determining a reference signal group for beam failure detection, and performing beam failure detection by using the reference signal group, wherein the reference signal group corresponds to a network device group, and wherein the user equipment communicates with the network device group in a single carrier frequency network mode; and in a case that a beam failure is detected, transmitting a beam failure recovery request to the network device group, receiving a beam failure recovery response from a network device in the network device group, the beam failure recovery response indicating at least one new beam, and communicating with at least one network device in the network device group by using the at least one new beam.

According to yet another aspect of the present disclosure, there is provided a method for beam failure recovery performed by a user equipment, comprising: performing beam failure detection using a configured reference signal, wherein the configured reference signal is updated according to a unified TCI state; and in a case that a beam failure is detected, transmitting a beam failure recovery request to a network device, the beam failure recovery request indicating a new beam that the user equipment wishes to use, receiving a beam failure recovery response from the network device, the beam failure recovery response indicating the new beam confirmed by the network device, and communicating with the network device by using the new beam confirmed by the network device.

According to yet another aspect of the present disclosure, there is provided a non-transitory computer-readable storage medium having program instructions stored thereon, which, when executed by a computer, cause the computer to perform the methods of the present disclosure.

### BRIEF DESCRIPTION OF THE DRAWINGS

A better understanding of the present disclosure can be obtained when following detailed description of the embodiments is considered in conjunction with accompanying drawings. The same or similar reference numerals are used in the drawings to refer to the same or similar parts. The drawings, together with the specific description below, are included in and forms part of the specification, and are used to illustrate the embodiments of the present disclosure and explain the principles and advantages of the present disclosure.
FIG. 1 is a schematic diagram illustrating a SFN transmission mode in a high-speed mobile scenario.
FIG. 2 is a schematic diagram illustrating a non-UE-specific BFD RS and a UE-specific BFD RS.
FIG. 3 is a flowchart illustrating a beam failure recovery process according to an embodiment of the present disclosure.
FIG. 4 is a schematic diagram illustrating SFN transmission using two network devices.
FIG. 5 is a schematic diagram illustrating transmission of PUCCH-SR in SFN mode.
FIG. 6 is a schematic diagram illustrating utilization of PUCCH-SR in a BFRQ process of a BFR process.
FIG. 7 illustrates a beam failure recovery process by using a unified TCI state according to an embodiment of the present disclosure.
FIG. 8 is a schematic diagram illustrating TCI states.
FIG. 9 is a block diagram illustrating an example of a schematic configuration of a computing device to which the technology of the present disclosure can be applied.
FIG. 10 is a block diagram illustrating a first example of a schematic configuration of a gNB to which the technology of the present disclosure can be applied.
FIG. 11 is a block diagram illustrating a second example of a schematic configuration of a gNB to which the technology of the present disclosure can be applied.
FIG. 12 is a block diagram showing an example of a schematic configuration of a smart phone to which the technology of the present disclosure can be applied.
FIG. 13 is a block diagram showing an example of a schematic configuration of a car navigation device to which the technology of the present disclosure can be applied.

### DETAILED DESCRIPTION

Hereinafter, preferred embodiments of the present disclosure will be described in detail with reference to the accompanying drawings. Note that in the specification and drawings, the same reference numerals are used to denote structural elements having substantially the same function and structure, and repeated descriptions of these structural elements are omitted.

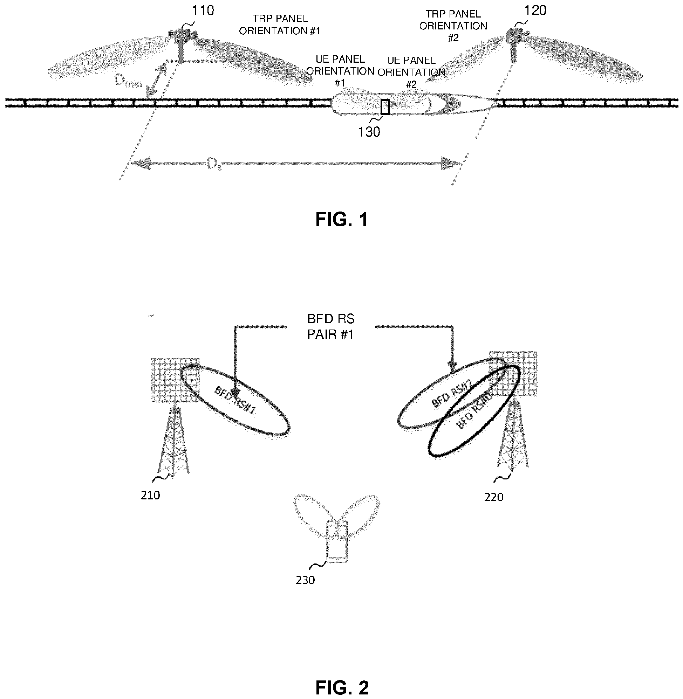

The SFN transmission scheme requires a network (NW) to transmit data or control information of the same content to a UE from two Transmit Receive Points (TRP) at the same time, and occupy completely the same time-frequency resources. This requires performing activation of two Transmission Configuration Information (TCI) states for CORESETs transmitted from multiple TRPs. FIG. 1 is a schematic diagram illustrating a SFN transmission mode in a high-speed mobile scenario. As shown in FIG. 1, UE 130 on a high-speed railway performs SFN transmission with TRP 110 and TRP 120. Antenna panels of UE 130 are oriented to different TRPs simultaneously.

This disclosure provides a beam failure recovery (BFR) process suitable for the SFN transmission mode, including beam failure detection and discovery and reporting of new beams. The beam failure recovery process of the present disclosure includes 4 steps. The first step is the beam failure detection by a UE on a downlink, that is, BFD. The second step is to perform beam failure reporting by the UE, that is, BFRQ. If this step is based on reporting of an uplink media access control (MAC) control element (CE), it can be further split into 2 sub-steps, because the UE also needs to apply resources for the physical uplink shared channel (PUSCH) for carrying the MAC CE, that is, the UE transmits a scheduling request to the NW. If this step is based on the physical random-access channel (PRACH) process, from the physical layer perspective, only one step is required. The third step is a beam failure reporting response to the request by the NW, that is, BFRR. The fourth step is the recovery of beam failure, that is, the UE recovers the failed beam to a newly reported beam.

In an actual SFN transmission process, except for non-UE-specific PDCCH channels, all other UE-specific PDCCHs are transmitted through SFN transmission. In the original SFN transmission mode, after a UE accesses a network, the UE is configured by the NW through RRC signaling. After the UE completes the RRC configuration, it often uses only UE-specific channels. These UE-specific channels need to use 2 activated TCI states in SFN mode.

In addition, it should be noted that, for PDCCH, if the search space set associated with CORESET in which it is located is of type 0/0a/1/2, the PDCCH and its scheduled channels and signals belong to the non-UE-specific type, which do not use SFN transmission in general.

FIG. 2 is a schematic diagram illustrating a non-UE-specific BFD RS and a UE-specific BFD RS. As shown in FIG. 2, network device 210 and network device 220 utilizes UE-specific CORESET for SFN transmission with UE 230. The UE-specific CORESET carries BFD reference signal (RS) pair #1, including BFD RS#1 and BFD RS#2. In addition, network device 220 also utilizes non-UE-specific CORESET (e.g., CORESET #0 associated with a specific CSS) for non-SFN transmission, on which BFD RS #0 is carried.

The beam failure recovery process in a network devices and a UE according to an embodiment of the present disclosure will be described below. In the embodiment of the present disclosure, the processing in the network device and/or the UE may be performed by itself or components thereof (e.g., an electronic devices such as a chip). The electronic device may include a processing circuitry. The processing circuitry may output signals (digital or analog) to the network device and/or other components in the UE, or receive signals (digital or analog) from the network device and/or other components in the UE. In addition, the processing circuitry may also control some or all of operations of the network device and/or other components in the UE.

The processing circuitry may be in the form of a general-purpose processor or a dedicated processing circuitry such as an ASIC. For example, the processing circuitry can be configured by a circuit (hardware) or a central processing device (such as a central processing unit (CPU)). In addition, a program (software) for operating a circuit (hardware) or a central processing device may be carried on the processing circuitry. The program can be stored in a memory (such as arranged in distributed nodes and/or a central processing apparatus or electronic devices) or an external storage medium connected from outside, and can be downloaded via a network (such as the Internet).

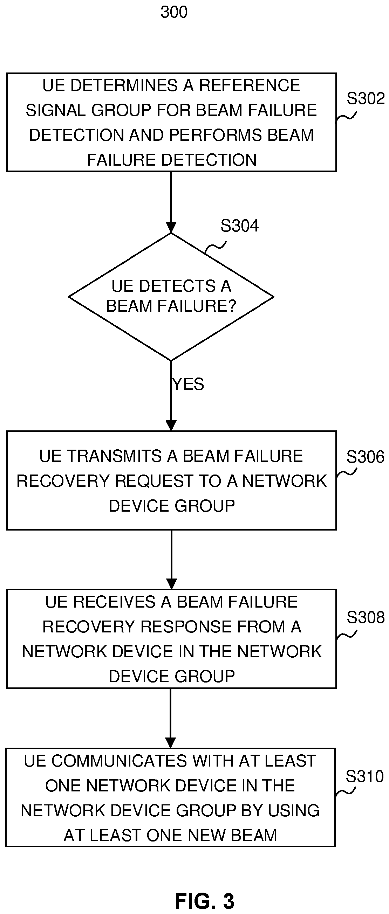

FIG. 3 is a flowchart illustrating a beam failure recovery process 300 according to an embodiment of the present disclosure. The UE communicates with a network device group including multiple network devices in a single carrier frequency network mode.

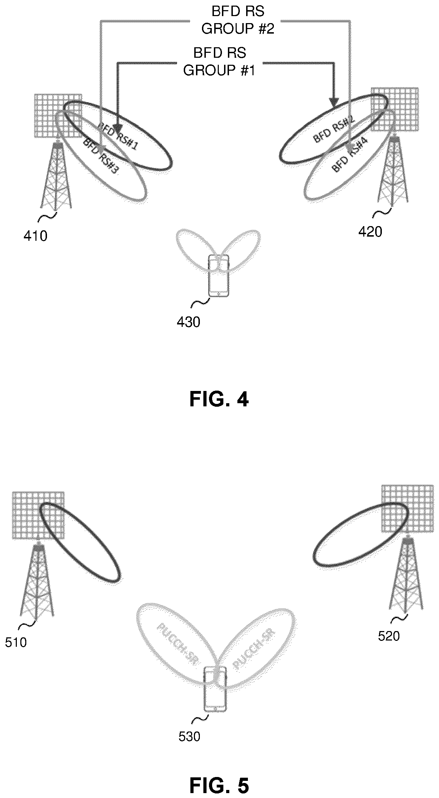

In step S302, the UE determines a reference signal group (BFD RS group) used for beam failure detection, and performs beam failure detection by using the reference signal group. Reference signals in the reference signal group correspond to network devices in a network device group. In some embodiments of the present disclosure, the number of network devices in the network device group and the number of reference signals in the reference signal group are both 2. FIG. 4 is a schematic diagram illustrating SFN transmission using two network devices. In FIG. 4, UE 430 performs SFN transmission with two network devices (network device 410 and network device 420).

The BFD RS group may be determined explicitly or implicitly. If explicit BFD RS is selected, the network device configures K BFD RS groups for the UE through radio resource control (RRC) signaling, and RSs in each BFD RS group come from their corresponding network devices, respectively. The UE receives RRC signaling, which indicates the BFD RS group, from the network device group.

If implicit BFD RS is selected, the UE needs to use the downlink (DL) RS of the TCI state in the CORESET where the UE-specific PDCCH is located as the BFD RS. The UE uses two or more downlink reference signals in two or more TCI states corresponding to the network device group as a BFD RS group.

In some embodiments of the present disclosure, a periodic channel state information reference signal (CSI-RS) or synchronization signal block (SSB (itself periodic)) may be selected as the BFD RS.

In step S304, the UE determines whether beam failure is detected. The UE can determine whether beam failure is detected by evaluating the quality of the downlink channel of the BFD RS group. In a case that the quality of the downlink channel of the BFD RS group is poor, it is determined that beam failure is detected.

In some embodiments of the present disclosure, the UE calculates joint received signal quality of the BFD RS group to evaluate the downlink channel. The joint received signal quality refers to the received signal quality calculated by treating all BFD RS signals in the BFD RS group as useful signals. For example, the UE calculates the joint BLER to characterize the channel quality in the downlink SFN transmission mode. It should be noted that in this SFN mode, the UE considers that all signals from the network device group are useful signals, not interference. As an example, in a case that two network devices perform SFN transmission, strengths of useful signals from the two network devices are measured first, for example, S1 and S2, and then the overall interference plus noise (I + N) is measured, thereby deriving the Signal to Interference plus Noise Ratio SINR = (S1+S2) / (I + N). Subsequently, the UE can obtain a mapping relationship from SINR to BLER through its own receiver structure. For example, when SINR=0dB, BLER is 0.01. Therefore, the UE can calculate a joint BLER from one BFD RS group.

In some embodiments of the present disclosure, the UE calculates individual received signal quality of each BFD RS in the BFD RS group to evaluate the downlink channel. For example, the UE calculates individual BLER respectively according to each BFD RS in the BFD RS group, and evaluates the quality of the downlink channel according to all calculated BLERs. For example, the UE may select the minimum value among all calculated BLERs as the channel quality of this SFN transmission mode.

When a UE supports joint BLER, the UE can calculate the joint BLER and evaluate the downlink channel according to the joint BLER. When a UE does not support joint BLER, the UE can calculate individual BLER for each BFD RS and utilize all calculated BLER to evaluate the downlink channel through a preset algorithm.

In some embodiments of the present disclosure, the UE transmits capability information to a network device group, the capability information indicating a maximum number of BFD RS groups that the UE can detect for each bandwidth portion, each component carrier, or each UE. The network device can configure a BFD RS for the UE within its capability range according to the capability information of the UE.

In a case that beam failure is detected, the process flow 300 proceeds to step S306. In step S306, the US performs a beam failure reporting (BFRQ) process by transmitting a beam failure recovery request to the network device.

In some embodiments of the present disclosure, the UE requests PUSCH resources in a Physical Uplink Control Channel Scheduling Request (PUCCH-SR) and indicates one or more new beams in a Media Access Control Control Element (MAC CE). The PUCCH-SR mentioned here is a PUCCH resource used to carry SR, whose function is to apply for uplink resources (i.e., PUSCH) from the network device to carry the MAC CE.

The PUCCH-SR may have two modes. The first mode is that PUCCH-SR is transmitted in accordance with the SFN mode. The UE transmits PUCCH-SR to the network device group in SFN mode. FIG. 5 is a schematic diagram illustrating transmission of PUCCH-SR in SFN mode. As shown in FIG. 5, UE 530 transmits the PUCCH-SR to multiple network devices including network device 510 and network device 520 by using an uplink SFN mode. The advantage of this is that the transmission of PUCCH has the gain of spatial diversity at multiple network devices. The second mode is that the UE transmits the PUCCH-SR to one network device of the network device group. This network device is selected and thought to have better performance by the UE from multiple network devices, or is designated by the network.

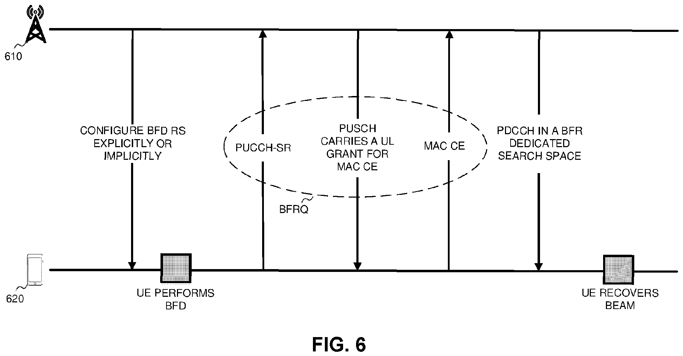

FIG. 6 is a schematic diagram illustrating utilization of PUCCH-SR in a BFRQ process of a BFR process. In FIG. 6, the BFRQ process is implemented by UE 620 transmitting a PUCCH-SR to network device 610, the network device 610 transmitting a UL grant to the UE 620 in response, and the UE transmitting a MAC CE to the network device 610 after receiving the UL grant.

The MAC CE may indicate one or more new beams. In a case that the MAC CE indicates a new beam corresponding to one DL RS, the UE no longer performs SFN communication with multiple network devices in a network device group, but performs non-SFN communication with a single network device in the network device group. In a case that the MAC CE indicates multiple new beams corresponding to multiple DL RSs, the UE continues SFN communication with multiple network devices in the network device group. Therefore, it is up to the UE to decide whether to revert to SFN mode or non-SFN mode. In addition, in addition to selecting beams that can be recovered from the cell that is serving the UE, we can also consider that the UE informs the network device that it wants to restore to some current non-serving cells (these non-serving cells may allow the UE to perform certain measurements, and some TCI states are activated).

In addition, the UE can also report more new beams in the MAC CE than the number of network devices in the network device group. The network device informs the UE whether it should revert to the single network device mode with one beam or the SFN mode through subsequent confirmation of the PDCCH in specific search space. Specifically, the network device can give the recovered DL RS directly in the TCI field in the DCI. If there is one DL RS, the UE reverts to the single network device mode. If there are two DL RSs, the UE reverts to the SFN mode for multiple network devices.

In some embodiments of the present disclosure, the UE transmits a preamble corresponding to one or more new beams. When the UE is configured to revert to the SFN mode, the UE may transmit a preamble corresponding to multiple new beams. When the UE is configured to revert to the single network device mode only, the UE may transmit a preamble corresponding to a new beam. If both modes are feasible, the UE can decide itself regarding which mode to revert to.

In step S308, the UE receives a beam failure recovery response from a network device in the network device group, the beam failure recovery response indicating at least one new beam. For a response to revert to the SFN mode, it may be confirmed with the UE by multiple network devices transmitting DCI in the SFN mode. For a response to revert to the single network device mode, it may be confirmed with the UE by a network device selected by the UE transmitting corresponding DCI. The confirmed DCI here does not need to contain a specific TCI state itself; it only needs to be sent out from a specific search space.

In step S310, the UE communicates with at least one network device in the TPR group by using at least one new beam. In case of reverting to the SFN mode, the UE communicates with multiple network devices in the SFN mode. In case of reverting to the single network device mode, the UE performs non-SFN communication with a selected network device.

If implicit BFD RS is used in the BFD process, the UE determines the BFD RS through the DL RS in the TCI state in CORESET. Since the TCI state in CORESET can be dynamically updated through DCI, after the beam failure is recovered, the TCI state of CORESET may also be dynamically updated to a new beam. Naturally, BFD RS has also been updated accordingly.

However, if explicit BFD RS is used in the BFD process, the BFD RS is configured by RRC signaling. If the BFD RS is dynamically updated through RRC signaling, the overhead will be relatively large. Considering that a unified TCI state is newly defined in Rel.17, this disclosure proposes to update the BFD RS by using the unified TCI state in DCI.

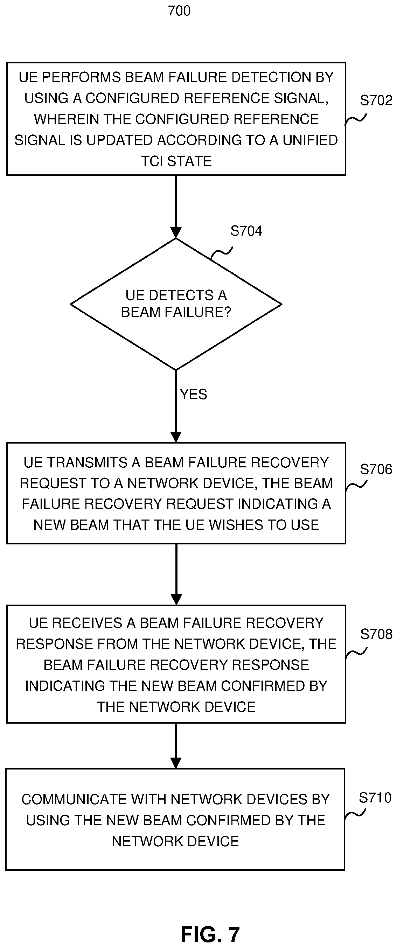

FIG. 7 illustrates a beam failure recovery process 700 by using a unified TCI state according to an embodiment of the present disclosure.

In step S702, the UE performs beam failure detection by using a configured reference signal. The configured reference signal may be updated according to the unified TCI state. In step S704, the UE determines whether a beam failure is detected. If a beam failure is detected, in step S706, the UE transmits a beam failure recovery request to the network device, wherein the beam failure recovery request indicates a new beam that the UE wishes to use. In step S708, the UE receives a beam failure recovery response from the network device, wherein the beam failure recovery response indicates the new beam confirmed by the network device. In step S709, the UE communicates with the network device by using the new beam confirmed by the network device.

In some embodiments of the present disclosure, a beam failure recovery request indicates unified TCI state. In a first case, the unified DCI state indicated by the beam failure recovery request may be an uplink TCI state to recover only the uplink channel and/or signal to this uplink TCI state. In a second case, the unified DCI state indicated by the beam failure recovery request may be a downlink TCI state to recover only the downlink channel and/or signal to this downlink TCI state. In a third case, the unified DCI state indicated by the beam failure recovery request may be the uplink TCI state and the downlink TCI state to recover the uplink channel and/or signal to the uplink TCI state, and recover the downlink channel and/or signal to this downlink TCI state. In the third case, the downlink and uplink may be recovered to different beam directions. In a fourth case, the unified DCI state indicated by the beam failure recovery request may be a joint TCI state to recover the downlink and uplink channels/signals to the joint TCI state.

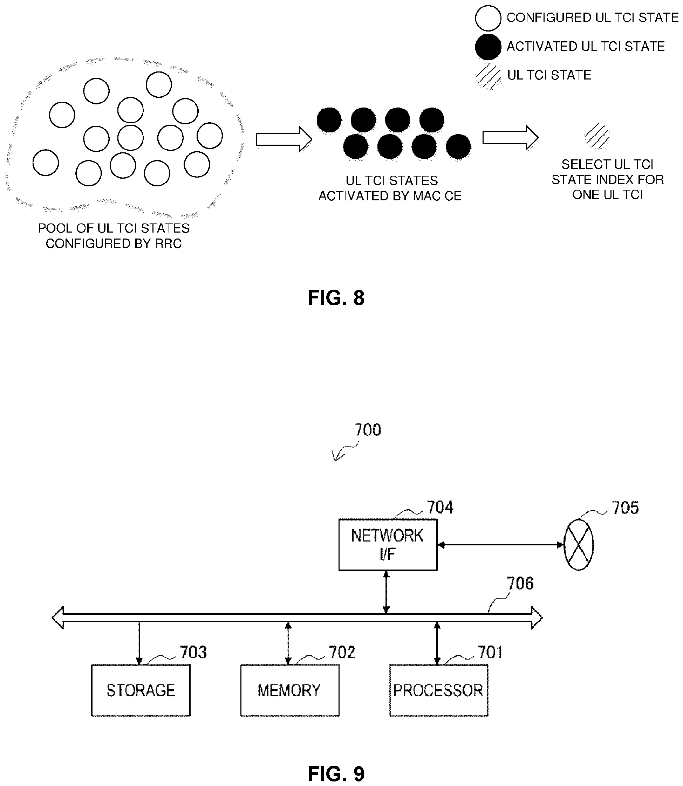

In some embodiments of the present disclosure, the beam failure recovery request includes an activated codepoint of a TCI field. This can avoid time consumption caused by TCI state reactivation. FIG. 8 is a schematic diagram illustrating TCI states. In FIG. 8, the leftmost is the pool of TCI states configured by RRC, which can have up to 128 TCI states. Because there are too many TCI states, DCI has no way to give direct instructions. Therefore, MAC CE needs to activate 8 TCI states from a maximum of 128 TCI states. The TCI state field in DCI contains up to 3 bits, equivalent to 8 codepoints. Each codepoint has a one-to-one correspondence with a TCI state activated by MAC CE. Because the TCI states corresponding to these 8 codepoints are all activated, if the UE directly reports 1 TCI state among the 8 TCI states, it does not need to activate a new TCI state, thus reducing a certain latency.

In some embodiments of the present disclosure, for one or more of the channels, signals, or component carriers configured to share a unified TCI state, the new beam confirmed by the network device is used to communicate with the network device. Network devices are configured to determine which channels, signals, and component carriers can share the unified TCI state indicated by the network devices. Channels, signals and/or component carriers that share the unified TCI state can be recovered to the same beam after BFR. For example, PDCCH, PDSCH and/or CSI-RS may share a unified TCI state for the downlink. PUSCH, PUCCH and/or SRS may share a unified TCI state for the uplink. PDCCH, PDSCH, CSI-RS, PUSCH, PUCCH and/or SRS may share a joint TCI state.

Additionally, some CCs can also be recovered to the same beam. Based on a configured CC list, when BFRR occurs, the UE can consider that all corresponding beams on CCs in the list have been recovered to new beams.

### <Application example>

The technology of the present disclosure can be applied to various products. For example, both network devices and user equipments can be implemented as various types of computing devices.

Furthermore, a network device can be implemented as any type of evolved Node B (eNB), gNB or TRP (Transmit Receive Point), such as a macro eNB/gNB and a small eNB/gNB. The small eNB/gNB may be an eNB/gNB that covers a cell smaller than a macro cell, such as a pico eNB/gNB, a micro eNB/gNB, and a home (femto) eNB/gNB. Alternatively, the base station can be implemented as any other type of base station, such as a NodeB and a Base Transceiver Station (BTS). The base station may include: a main body (also referred to as a base station device) configured to control wireless communication; and one or more remote radio heads (RRHs) disposed at places different from the main body. In addition, various types of terminals to be described below can operate as a base station by temporarily or semi-permanently performing base station functions.

In addition, a user equipment can be implemented as a mobile terminal (such as a smart phone, a tablet personal computer (PC), a notebook PC, a portable game terminal, a portable/dongle type mobile router, and a digital camera) or a vehicle-mounted terminal (such as a car navigation device). The user equipments can also be implemented as a terminal performing machine-to-machine (M2M) communication (also referred to as a machine type communication (MTC) terminal). In addition, the user equipment may be a wireless communication module (such as an integrated circuit module including a single wafer) mounted on each of above terminals.

### [Application examples regarding computing devices]

FIG. 9 is a block diagram illustrating an example of a schematic configuration of a computing device 700 to which the technology of the present disclosure can be applied. The computing device 700 includes a processor 701, a memory 702, a storage 703, a network I/F 704 and a bus 706.

The processor 701 may be, for example, a central processing unit (CPU) or a digital signal processor (DSP), and controls the functions of the server 700. The memory 702 includes a random access memory (RAM) and a read only memory (ROM), and stores data and programs executed by the processor 701. The storage 703 can include a storage medium, such as a semiconductor memory and a hard disk.

The network I/F 704 is a wired communication I/F for connecting the server 700 to the wired communication network 705. The wired communication network 705 can be a core network such as an evolved packet core network (EPC) or a packet data network (PDN) such as the Internet.

The bus 706 connects the processor 701, the memory 702, the storage 703, and the network I/F 704 to each other. The bus 706 can include two or more buses (such as a high-speed bus and a low-speed bus) each having a different speed.

### [Application examples regarding base stations]

### (First application example)

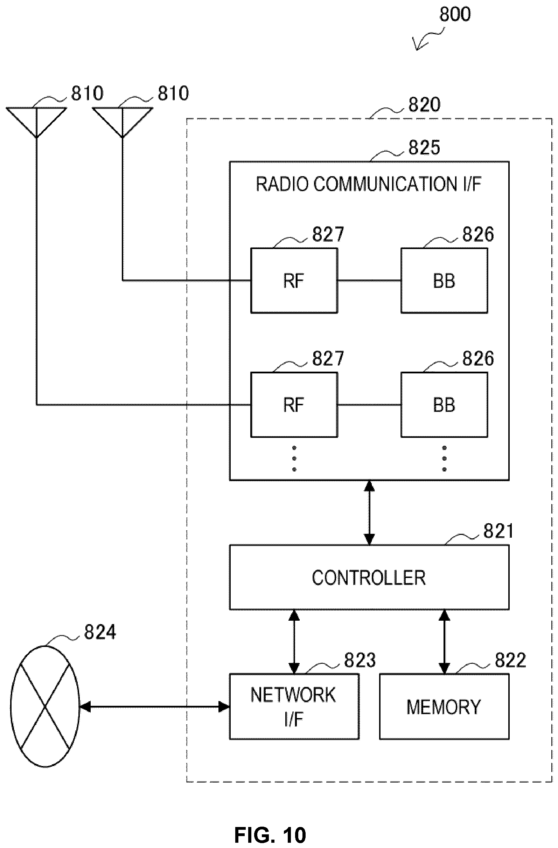

FIG. 10 is a block diagram illustrating a first example of a schematic configuration of a gNB to which the technology of the present disclosure can be applied. The gNB 800 includes one or more antennas 810 and a base station device 820. The base station device 820 and each antenna 810 may be connected to each other via an RF cable.

Each of the antennas 810 includes a single or a plurality of antenna elements (such as a plurality of antenna elements included in a Multiple Input Multiple Output (MIMO) antenna), and is used for the base station device 820 to transmit and receive wireless signals. As shown in FIG. 10, gNB 800 may include a plurality of antennas 810. For example, the plurality of antennas 810 may be compatible with a plurality of frequency bands used by the gNB 800. Although FIG. 10 illustrates an example in which the gNB 800 includes a plurality of antennas 810, the gNB 800 may also include a single antenna 810.

The base station device 820 includes a controller 821, a memory 822, a network I/F 823, and a radio communication I/F 825.

The controller 821 may be, for example, a CPU or a DSP, and operates various functions of higher layers of the base station device 820. For example, the controller 821 generates a data packet from data in signals processed by the radio communication I/F 825, and transfers the generated packet via the network I/F 823. The controller 821 may bundle data from a plurality of base band processors to generate the bundled packet and transfer the generated bundled packet. The controller 821 may have logic functions of performing control such as radio resource control, radio bearer control, mobility management, admission control, and scheduling. This control may be performed in conjunction with an gNB or a core network node in the vicinity. The memory 822 includes RAM and ROM, and stores a program that is executed by the controller 821, and various types of control data (such as a terminal list, transmission power data, and scheduling data).

The network I/F 823 is a communication I/F for connecting the base station device 820 to a core network 824. The controller 821 may communicate with a core network node or another gNB via the network I/F 823. In that case, the gNB 800, and the core network node or the other gNB may be connected to each other through a logical I/F (such as an S1 interface and an X2 interface). The network I/F 823 may also be a wired communication I/F or a radio communication I/F for radio backhaul. If the network I/F 823 is a radio communication I/F, the network I/F 823 may use a higher frequency band for wireless communication than a frequency band used by the radio communication I/F 825.

The radio communication I/F 825 supports any cellular communication scheme such as Long Term Evolution (LTE) and LTE-Advanced, and provides radio connection to terminal positioned in a cell of the gNB 800 via the antenna 810. The radio communication I/F 825 may typically include, for example, a baseband (BB) processor 826 and an RF circuit 827. The BB processor 826 may perform, for example, encoding/decoding, modulation/demodulation, and multiplexing/demultiplexing, and performs various types of signal processing of layers (such as L1, medium access control (MAC), radio link control (RLC), and packet data convergence protocol (PDCP)). The BB processor 826 may have a part or all of the above-described logical functions Instead of the controller 821. The BB processor 826 may be a memory that stores a communication control program, or a module that includes a processor and a related circuitry configured to execute the program. Updating the program may allow the functions of the BB processor 826 to be changed. The module may be a card or a blade that is inserted into a slot of the base station device 820. Alternatively, the module may also be a chip that is mounted on the card or the blade. Meanwhile, the RF circuit 827 may include, for example, a mixer, a filter, and an amplifier, and transmits and receives wireless signals via the antenna 810.

As illustrated in FIG. 10, the radio communication I/F 825 may include a plurality of BB processors 826. For example, the plurality of BB processors 826 may be compatible with a plurality of frequency bands used by the gNB 800. As illustrated in FIG. 10, the radio communication I/F 825 may include a plurality of RF circuits 827. For example, the plurality of RF circuits 827 may be compatible with a plurality of antenna elements. Although FIG. 10 illustrates an example in which the radio communication I/F 825 includes a plurality of BB processors 826 and a plurality of RF circuits 827, the radio communication I/F 825 may also include a single BB processor 826 or a single RF circuit 827.

### (Second application example)

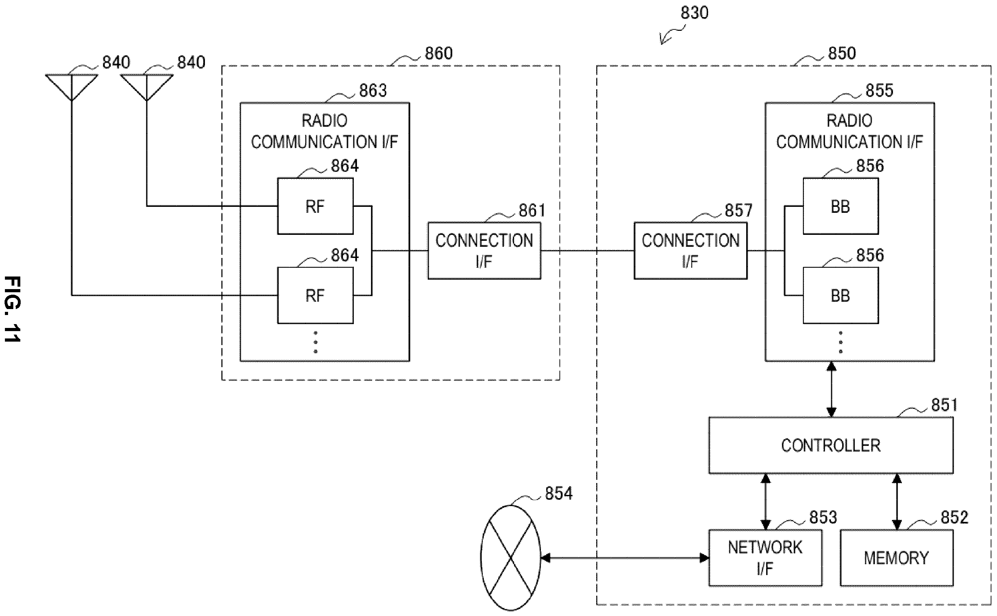

FIG. 11 is a block diagram illustrating a second example of a schematic configuration of a gNB to which the technology of the present disclosure can be applied. The gNB 830 includes one or more antennas 840, a base station device 850, and an RRH 860. The RRH 860 and each antenna 840 may be connected to each other via an RF cable. The base station device 850 and the RRH 860 may be connected to each other via a high speed line such as an optic fiber cable.

Each of the antennas 840 includes a single or a plurality of antenna elements (such as a plurality of antenna elements included in a MIMO antenna) and is used for the RRH 860 to transmit and receive wireless signals. As illustrated in FIG. 11, the gNB 830 may include a plurality of antennas 840. For example, the plurality of antennas 840 may be compatible with a plurality of frequency bands used by the gNB 830. Although FIG. 11 illustrates an example in which the gNB 830 includes a plurality of antennas 840, the gNB 830 may also include a single antenna 840.

The base station device 850 includes a controller 851, a memory 852, a network I/F 853, a radio communication I/F 855, and a connection I/F 857. The controller 851, memory 852, and network I/F 853 are the same as the controller 821, memory 822, and network I/F 823 described with reference to FIG. 10.

The radio communication I/F 855 supports any cellular communication scheme (such as LTE and LTE-Advanced) and provides wireless communication to a terminal positioned in a sector corresponding to the RRH 860 via the RRH 860 and the antenna 840. The radio communication I/F 855 may typically include, for example, a BB processor 856. The BB processor 856 is the same as the BB processor 826 described with reference to FIG. 10, except that the BB processor 856 is connected to the RF circuit 864 of the RRH 860 via the connection I/F 857. The radio communication I/F 855 may include the plurality of BB processors 856, as illustrated in FIG. 11. For example, the plurality of BB processors 856 may be compatible with a plurality of frequency bands used by the gNB 830. Although FIG. 11 illustrates the example in which the radio communication I/F 855 includes the plurality of BB processors 856, the radio communication I/F 855 may also include a single BB processor 856.

The connection I/F 857 is an interface for connecting the base station device 850 (radio communication I/F 855) to the RRH 860. The connection I/F 857 may also be a communication module for communicating in the above-described high speed line that connects the base station device 850 (radio communication I/F 855) to the RRH 860.

The RRH 860 includes a connection I/F 861 and a radio communication I/F 863.

The connection I/F 861 is an interface for connecting the RRH 860 (radio communication I/F 863) to the base station device 850. The connection I/F 861 may also be a communication module for communication in the above-described high speed line.

The radio communication I/F 863 transmits and receives wireless signals via the antenna 840. Radio communication I/F 863 may typically include, for example, the RF circuit 864. The RF circuit 864 may include, for example, a mixer, a filter, and an amplifier, and transmits and receives wireless signals via the antenna 840. The radio communication I/F 863 may include a plurality of RF circuits 864, as illustrated in FIG. 11. For example, the plurality of RF circuits 864 may support a plurality of antenna elements. Although FIG. 11 illustrates the example in which the radio communication I/F 863 includes the plurality of RF circuits 864, the radio communication I/F 863 may also include a single RF circuit 864.

### [Application examples regarding terminal devices]

### (First application example)

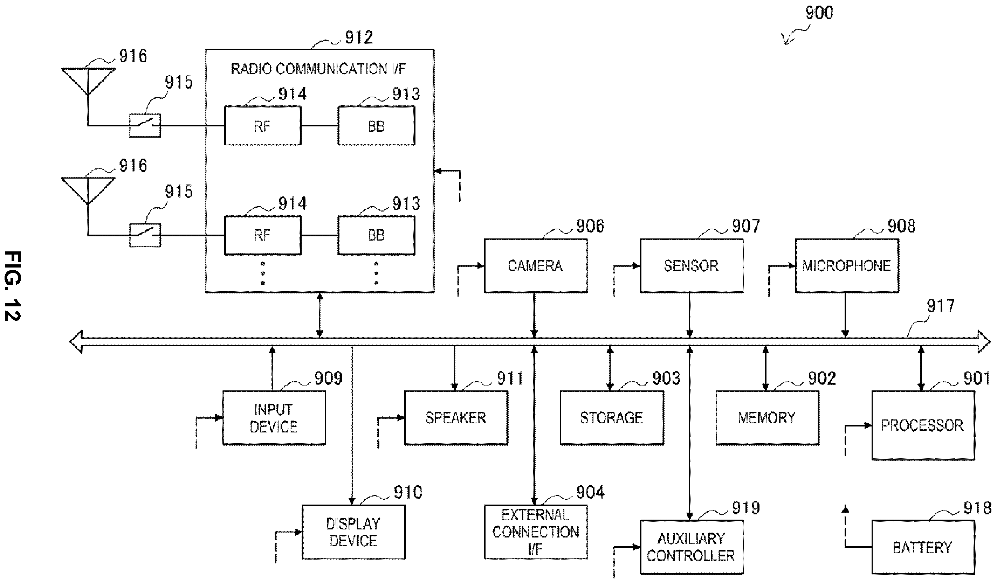

FIG. 12 is a block diagram illustrating an example of a schematic configuration of a smart phone 900 to which the technology of the present disclosure may be applied. The smart phone 900 includes a processor 901, a memory 902, a storage 903, an external connection I/F 904, a camera 906, a sensor 907, a microphone 908, an Input device 909, a display device 910, a speaker 911, a radio communication I/F 912, one or more antenna switches 915, one or more antennas 916, a bus 917, a battery 918, and an auxiliary controller 919.

The processor 901 may be, for example, a CPU or a system on a chip (SoC), and controls functions of an application layer and another layer of the smart phone 900. The memory 902 includes RAM and ROM, and stores data and a program that is executed by the processor 901. The storage 903 may include a storage medium such as a semiconductor memory and a hard disk. The external connection I/F 904 is an interface for connecting an external device such as a memory card and a universal serial bus (USB) device to the smart phone 900.

The camera 906 includes an image sensor such as a charge coupled device (CCD) and a complementary metal oxide semiconductor (CMOS), and generates a captured image. The sensor 907 may include a group of sensors such as a measurement sensor, a gyro sensor, a geomagnetic sensor, and an acceleration sensor. The microphone 908 converts sound that is input to the smart phone 900 to audio signals. The Input device 909 includes, for example, a touch sensor configured to detect touch onto a screen of the display device 910, a keypad, a keyboard, a button, or a switch, and receives an operation or an information input from a user. The display device 910 includes a screen such as a liquid crystal display (LCD) and an organic light-emitting diode (OLED) display, and displays an output image of the smart phone 900. The speaker 911 converts audio signals that are output from the smart phone 900 to sounds.

The radio communication I/F 912 supports any cellular communication scheme (such as LTE and LTE-Advanced) and performs wireless communication. The radio communication I/F 912 may typically include, for example, a BB processor 913 and an RF circuit 914. The BB processor 913 may perform, for example, encoding/decoding, modulation/demodulation, and multiplexing/demultiplexing, and performs various types of signal processing for wireless communication. Meanwhile, the RF circuit 914 may include, for example, a mixer, a filter, and an amplifier, and transmits and receives wireless signals via the antenna 916. The radio communication I/F 912 may be one chip module that has the BB processor 913 and the RF circuit 914 integrated thereon. The radio communication I/F 912 may include a plurality of BB processors 913 and a plurality of RF circuits 914, as illustrated in FIG. 12. Although FIG. 12 illustrates the example in which the radio communication I/F 912 includes a plurality of BB processors 913 and a plurality of RF circuits 914, the radio communication I/F 912 may also include a single BB processor 913 or a single RF circuit 914.

Furthermore, in addition to a cellular communication scheme, the radio communication I/F 912 may support another type of wireless communication scheme such as a short-distance wireless communication scheme, a near field communication scheme, and a wireless local area network (LAN) scheme. In that case, the radio communication I/F 912 may include the BB processor 913 and the RF circuit 914 for each wireless communication scheme.

Each of the antenna switches 915 switches connection destinations of the antennas 916 among multiple circuits (such as circuits for different wireless communication schemes) included in the radio communication I/F 912.

Each of the antennas 916 includes a single or a plurality of antenna elements (such as a plurality of antenna elements included in an MIMO antenna), and is used for the radio communication I/F 912 to transmit and receive wireless signals. The smart phone 900 may include a plurality of antennas 916, as illustrated in FIG. 12. Although FIG. 12 illustrates the example in which the smart phone 900 includes a plurality of antennas 916, the smart phone 900 may also include a single antenna 916.

Furthermore, the smart phone 900 may include the antenna 916 for each wireless communication scheme. In that case, the antenna switches 915 may be omitted from the configuration of the smart phone 900.

The bus 917 connects the processor 901, the memory 902, the storage 903, the external connection I/F 904, the camera 906, the sensor 907, the microphone 908, the Input device 909, the display device 910, the speaker 911, the radio communication I/F 912, and the auxiliary controller 919 to each other. The battery 918 supplies power to blocks of the smart phone 900 illustrated in FIG. 12 via feeder lines, which are partially shown as dashed lines in the figure. The auxiliary controller 919 operates a minimum necessary function of the smart phone 900, for example, in a sleep mode.

### (Second application example)

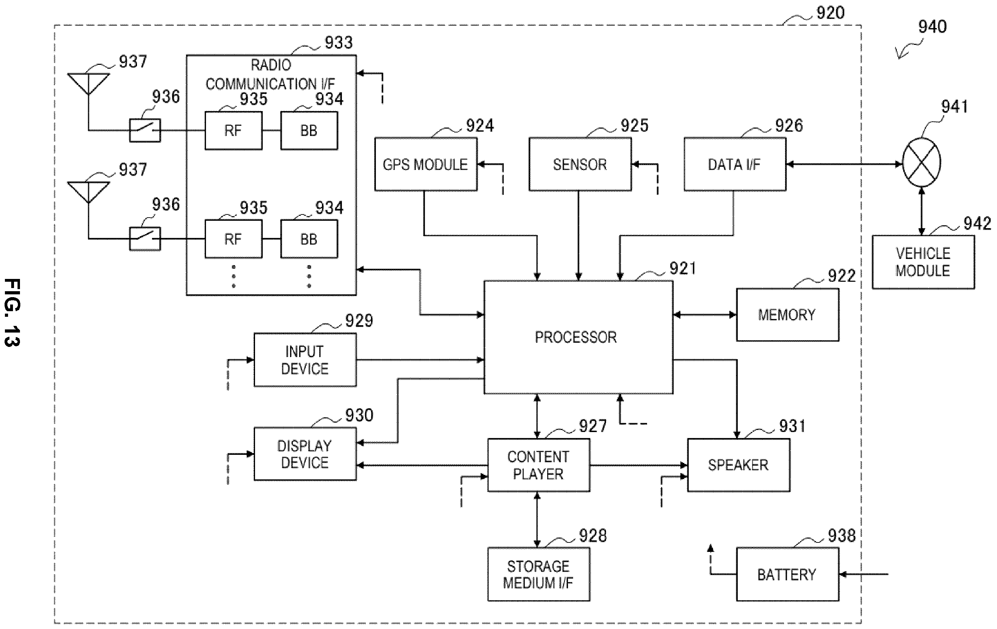

FIG. 13 is a block diagram illustrating an example of a schematic configuration of a car navigation device 920 to which the technology of the present disclosure may be applied. The car navigation device 920 includes a processor 921, a memory 922, a global positioning system (GPS) module 924, a sensor 925, a data I/F 926, a content player 927, a storage medium I/F 928, an Input device 929, a display device 930, a speaker 931, and a radio communication I/F 933, one or more antenna switches 936, one or more antennas 937, and a battery 938.

The processor 921 may be, for example, a CPU or a SoC, and controls a navigation function and another function of the car navigation device 920. The memory 922 includes RAM and ROM, and stores data and a program that is executed by the processor 921.

The GPS module 924 uses GPS signals received from a GPS satellite to measure a position (such as latitude, longitude, and altitude) of the car navigation device 920. The sensor 925 may include a group of sensors such as a gyro sensor, a geomagnetic sensor, and a barometric sensor. The data I/F 926 is connected to, for example, an in-vehicle network 941 via a terminal that is not shown, and acquires data (such as vehicle speed data) generated by the vehicle.

The content player 927 reproduces content stored in a storage medium (such as a CD and a DVD) that is inserted into the storage medium I/F 928. The Input device 929 includes, for example, a touch sensor configured to detect touch onto a screen of the display device 930, a button, or a switch, and receives an operation or an information input from a user. The display device 930 includes a screen such as an LCD or an OLED display, and displays an image of the navigation function or content that is reproduced. The speaker 931 outputs sound of the navigation function or the content that is reproduced.

The radio communication I/F 933 supports any cellular communication scheme (such as LTE and LTE-Advanced) and performs wireless communication. The radio communication I/F 933 may typically include, for example, a BB processor 934 and an RF circuit 935. The BB processor 934 may perform, for example, encoding/decoding, modulating/demodulating, and multiplexing/demultiplexing, and performs various types of signal processing for wireless communication. Meanwhile, the RF circuit 935 may include, for example, a mixer, a filter, and an amplifier, and transmits and receives wireless signals via the antenna 937. The radio communication I/F 933 may also be one chip module having the BB processor 934 and the RF circuit 935 integrated thereon. The radio communication I/F 933 may include a plurality of BB processors 934 and a plurality of RF circuits 935, as illustrated in FIG. 13. Although FIG. 13 illustrates the example in which the radio communication I/F 933 includes a plurality of BB processors 934 and a plurality of RF circuits 935, the radio communication I/F 933 may also include a single BB processor 934 or a single RF circuit 935.

Furthermore, in addition to a cellular communication scheme, the radio communication I/F 933 may support another type of wireless communication scheme, such as a short-distance wireless communication scheme, a near-field communication scheme, and a wireless LAN scheme. In that case, the radio communication I/F 933 may include the BB processor 934 and the RF circuit 935 for each wireless communication scheme.

Each of the antenna switches 936 switches connection destinations of the antennas 937 among multiple circuits (such as circuits for different wireless communication schemes) included in the radio communication I/F 933.

Each of the antennas 937 includes a single or a plurality of antenna elements (such as a plurality of antenna elements included in an MIMO antenna) and is used for the radio communication I/F 933 to transmit and receive wireless signals. The car navigation device 920 may include a plurality of antennas 937, as illustrated in FIG. 13. Although FIG. 13 illustrates the example in which the car navigation device 920 includes a plurality of antennas 937, the car navigation device 920 may also include a single antenna 937.

Furthermore, the car navigation device 920 may include the antenna 937 for each wireless communication scheme. In that case, the antenna switches 936 may be omitted from the configuration of the car navigation device 920.

The battery 938 supplies power to blocks of the car navigation device 920 illustrated in FIG. 13 via feeder lines that are partially shown as dashed lines in the figure. The battery 938 accumulates power supplied from the vehicle.

The technology of the present disclosure may also be realized as an in-vehicle system (or a vehicle) 940 including one or more blocks of the car navigation device 920, the in-vehicle network 941, and a vehicle module 942. The vehicle module 942 generates vehicle data such as vehicle speed, engine speed, and trouble information, and outputs the generated data to the in-vehicle network 941.

The various illustrative blocks and components described in connection with the present disclosure may be implemented or performed with a general purpose processor, a digital signal processor (DSP), an ASIC, an FPGA or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, and/or state machine. A processor may also be implemented as a combination of computing devices, e.g., a combination of a DSP and a microprocessor, a plurality of microprocessors, one or more microprocessors in conjunction with a DSP core, and/or any other such configuration.

The functions described herein may be implemented in hardware, software executed by a processor, firmware, or any combination thereof. If implemented in software executed by a processor, the functions may be stored on a non-transitory computer readable medium or transmitted as one or more instructions or code on a non-transitory computer readable medium. Other examples and implementations are within the scope and spirit of the disclosure and the appended claims. For example, in view of the nature of the software, the functions described above may be performed using software executed by a processor, hardware, firmware, hardwired, or any combination of thereof. Features that implement the functions may also be physically placed at various locations, including being distributed such that portion of the functionality are realized at different physical locations.

Furthermore, the disclosure of components contained within or separate from other components should be considered as exemplary, as various other architectures may potentially be realized to achieve the same functionality, including incorporation of all, a majority part of, and/or some of the elements as one or more single structures or a portion of a separated structure.

Non-transitory computer readable media can be any available non-transitory media that may be accessed by a general purpose or special purpose computer. By way of example and not limitation, a non-transitory computer readable medium may comprise RAM, ROM, EEPROM, flash memory, CD-ROM, DVD or other optical disk storage, disk storage or other magnetic storage device, or any other medium that can be used to carry or store desired program code component in the form of instruction or data structure and that can be accessed by a general purpose or special purpose computer or a general purpose or special purpose processor.

The foregoing description of the disclosure is provided to enable a person skilled in the art to make or use the disclosure. The various modifications of the present disclosure will be apparent to those skilled in the art, and the general principles defined herein may be applied to other variations without departing from the scope of the present disclosure. Accordingly, the present disclosure is not limited to the examples and designs described herein, rather, it corresponds to the broadest scope consistent with the disclosed principles and novel features.

Embodiments of the present disclosure also include:
1. An electronic device for beam failure recovery, comprising a processing circuitry configured to:
   determine a reference signal group for beam failure detection, and perform beam failure detection by using the reference signal group, wherein the reference signal group corresponds to a network device group, and wherein the electronic device communicates with network device group in a single carrier frequency network mode; and
   in a case that a beam failure is detected,
   transmit a beam failure recovery request to the network device group,
   receive a beam failure recovery response from a network device in the network device group, the beam failure recovery response indicating at least one new beam, and
   communicate with at least one network device in the network device group by using the at least one new beam.
2. The electronic device of item 1, wherein determining a reference signal group for beam failure detection includes:
   receiving radio resource control signaling indicating the reference signal group from the network device group.
3. The electronic device of item 1, wherein determining a reference signal group for beam failure detection includes:
   using two or more downlink reference signals in two or more TCI states corresponding to the network device group as the reference signal group.
4. The electronic device of item 1, wherein performing beam failure detection by using the reference signal group includes:
   evaluating a downlink channel by calculating joint received signal quality of the reference signal group.
5. The electronic device of item 1, wherein performing beam failure detection by using the reference signal group includes:
   evaluating a downlink channel by calculating individual received signal quality of each reference signal in the reference signal group.
6. The electronic device of item 1, wherein the processing circuitry is further configured to: transmit capability information to the network device group, the capability information indicating a maximum number of reference signal groups that the electronic device can detect for one or more of each bandwidth portion, each component carrier, or each user equipment.
7. The electronic device of item 1, wherein transmitting a beam failure recovery request to the network device group includes:
   transmitting a physical uplink control channel scheduling request to the network device group in a single carrier frequency network mode, and
   indicating one or more new beams to the network device group in a Medium Access Control control element.
8. The electronic device of item 1, wherein transmitting a beam failure recovery request to the network device group includes:
   transmitting a physical uplink control channel scheduling request to one network device in the network device group, and
   indicating one or more new beams to the one network device in a Medium Access Control control element.
9. The electronic device of item 1, wherein transmitting a beam failure recovery request includes:
   transmitting a preamble corresponding to one or more new beams.
10. The electronic device of item 1, wherein the at least one network device includes a plurality of network devices, the at least one new beam includes a plurality of new beams, and the electronic device communicates with the plurality of network devices in a single carrier frequency network mode.
11. The electronic device of item 1, wherein the at least one network device includes only one network device, and the at least one new beam includes only one new beam.
12. An electronic device for beam failure recovery, comprising a processing circuitry configured to:
   perform beam failure detection by using a configured reference signal, wherein the configured reference signal is updated according to a unified TCI state; and
   in a case that a beam failure is detected,
   transmit a beam failure recovery request to a network device, the beam failure recovery request indicating a new beam that the electronic device wishes to use,
   receive a beam failure recovery response from the network device, the beam failure recovery response indicating the new beam confirmed by the network device, and
   communicate with the network device by using the new beam confirmed by the network device.
13. The electronic device of item 12, wherein the beam failure recovery request indicates one of:
   an uplink TCI state;
   a downlink TCI state;
   an uplink TCI state and a downlink TCI state; or
   a joint TCI state.
14. The electronic device of item 12, wherein the beam failure recovery request includes an activated codepoint of a TCI field.
15. The electronic device of item 12, wherein, for one or more of channels, signals, or component carriers configured to share a unified TCI state, communicate with the network device by using the new beam confirmed by the network device.
16. A method for beam failure recovery performed by a user equipment, comprising:
   determining a reference signal group for beam failure detection, and performing beam failure detection by using the reference signal group, wherein the reference signal group corresponds to a network device group, and wherein the user equipment communicates with the network device group in a single carrier frequency network mode; and
   in a case that a beam failure is detected,
   transmitting a beam failure recovery request to the network device group,
   receiving a beam failure recovery response from a network device in the network device group, the beam failure recovery response indicating at least one new beam, and
   communicating with at least one network device in the network device group by using the at least one new beam.
17. A method for beam failure recovery performed by a user equipment, comprising:
   performing beam failure detection using a configured reference signal, wherein the configured reference signal is updated according to a unified TCI state; and
   in a case that a beam failure is detected,
   transmitting a beam failure recovery request to a network device, the beam failure recovery request indicating a new beam that the user equipment wishes to use,
   receiving a beam failure recovery response from the network device, the beam failure recovery response indicating the new beam confirmed by the network device, and
   communicating with the network device by using the new beam confirmed by the network device.
18. A non-transitory computer-readable storage medium having program instructions stored thereon which, when executed by a computer, cause the computer to perform the method of item 16 or 17.
19. A computer program product comprising program instructions which, when executed by a computer, cause the computer to perform the method of item 16 or 17.

## Claims

1. An electronic device for beam failure recovery, comprising a processing circuitry configured to:
determine a reference signal group for beam failure detection, and perform beam failure detection by using the reference signal group, wherein the reference signal group corresponds to a network device group, and wherein the electronic device communicates with the network device group in a single carrier frequency network mode; and
in a case that a beam failure is detected,
transmit a beam failure recovery request to the network device group,
receive a beam failure recovery response from a network device in the network device group, the beam failure recovery response indicating at least one new beam, and
communicate with at least one network device in the network device group by using the at least one new beam.

2. The electronic device of claim 1, wherein determining a reference signal group for beam failure detection includes:
receiving radio resource control signaling indicating the reference signal group from the network device group.

3. The electronic device of claim 1, wherein determining a reference signal group for beam failure detection includes:
using two or more downlink reference signals in two or more TCI states corresponding to the network device group as the reference signal group.

4. The electronic device of claim 1, wherein performing beam failure detection by using the reference signal group includes:
evaluating a downlink channel by calculating joint received signal quality of the reference signal group.

5. The electronic device of claim 1, wherein performing beam failure detection by using the reference signal group includes:
evaluating a downlink channel by calculating individual received signal quality of each reference signal in the reference signal group.

6. The electronic device of claim 1, wherein the processing circuitry is further configured to:
transmit capability information to the network device group, the capability information indicating a maximum number of reference signal groups that the electronic device can detect for one or more of each bandwidth portion, each component carrier, or each user equipment.

7. The electronic device of claim 1, wherein transmitting a beam failure recovery request to the network device group includes:
transmitting a physical uplink control channel scheduling request to the network device group in a single carrier frequency network mode, and
indicating one or more new beams to the network device group in a Medium Access Control control element.

8. The electronic device of claim 1, wherein transmitting a beam failure recovery request to the network device group includes:
transmitting a physical uplink control channel scheduling request to one network device in the network device group, and
indicating one or more new beams to the one network device in a Medium Access Control control element.

9. The electronic device of claim 1, wherein transmitting a beam failure recovery request includes:
transmitting a preamble corresponding to one or more new beams.

10. The electronic device of claim 1, wherein the at least one network device includes a plurality of network devices, the at least one new beam includes a plurality of new beams, and the electronic device communicates with the plurality of network devices in a single carrier frequency network mode.

11. The electronic device of claim 1, wherein the at least one network device includes only one network device, and the at least one new beam includes only one new beam.

12. An electronic device for beam failure recovery, comprising a processing circuitry configured to:
perform beam failure detection by using a configured reference signal, wherein the configured reference signal is updated according to a unified TCI state; and
in a case that a beam failure is detected,
transmit a beam failure recovery request to a network device, the beam failure recovery request indicating a new beam that the electronic device wishes to use,
receive a beam failure recovery response from the network device, the beam failure recovery response indicating the new beam confirmed by the network device, and
communicate with the network device by using the new beam confirmed by the network device.

13. The electronic device of claim 12, wherein the beam failure recovery request indicates one of:
an uplink TCI state;
a downlink TCI state;
an uplink TCI state and a downlink TCI state; or
a joint TCI state.

14. The electronic device of claim 12, wherein the beam failure recovery request includes an activated codepoint of a TCI field.

15. The electronic device of claim 12, wherein, for one or more of channels, signals, or component carriers configured to share a unified TCI state, communicate with the network device by using the new beam confirmed by the network device.

16. A method for beam failure recovery performed by a user equipment, comprising:
determining a reference signal group for beam failure detection, and performing beam failure detection by using the reference signal group, wherein the reference signal group corresponds to a network device group, and wherein the user equipment communicates with the network device group in a single carrier frequency network mode; and
in a case that a beam failure is detected,
transmitting a beam failure recovery request to the network device group,
receiving a beam failure recovery response from a network device in the network device group, the beam failure recovery response indicating at least one new beam, and
communicating with at least one network device in the network device group by using the at least one new beam.

17. A method for beam failure recovery performed by a user equipment, comprising:
performing beam failure detection using a configured reference signal, wherein the configured reference signal is updated according to a unified TCI state; and
in a case that a beam failure is detected,
transmitting a beam failure recovery request to a network device, the beam failure recovery request indicating a new beam that the user equipment wishes to use,
receiving a beam failure recovery response from the network device, the beam failure recovery response indicating the new beam confirmed by the network device, and
communicating with the network device by using the new beam confirmed by the network device.

18. A non-transitory computer-readable storage medium having program instructions stored thereon which, when executed by a computer, cause the computer to perform the method of claim 16 or 17.

19. A computer program product comprising program instructions which, when executed by a computer, cause the computer to perform the method of claim 16 or 17.
